# EUROPÄISCHE PATENTSCHRIFT

(11) **EP 2 593 334 B1**
(45) Veröffentlichungstag und Bekanntmachung des Hinweises auf die Patenterteilung: **09.05.2018**
(21) Anmeldenummer: 11735997.6
(22) Anmeldetag: 15.07.2011
(51) Int. Cl.: B60Q 1/44, B60T 7/04

(54) **SENSORBAUGRUPPE FÜR EINEN HAUPTZYLINDER**
SENSOR ASSEMBLY FOR A MASTER CYLINDER
ARRANGEMENT DE CAPTEURS POUR UN MAÎTRE CYLINDRE

(30) Priorität: 16.07.2010 DE 102010027308
(43) Veröffentlichungstag der Anmeldung: 22.05.2013
(73) Patentinhaber: Lucas Automotive GmbH, 56070 Koblenz (DE)
(72) Erfinder: KNECHTGES, Josef, 56727 Mayen (DE); NAETHER, Niko, 56355 Nastaetten (DE); BARON, Thomas, 53518 Leimbach (DE); SCHAUST, Karl-Heinz, 56133 Fachbach (DE); ULLMER, Klaus, 56073 Koblenz (DE)
(74) Vertreter: Röthinger, Rainer
(86) Internationale Anmeldenummer: PCT/EP2011/003551
(87) Internationale Veröffentlichungsnummer: WO 2012/007178

(56) Entgegenhaltungen:
- EP-A1- 2 072 969
- WO-A1-02/43996
- DE-A1- 19 855 358

## Beschreibung

### Technisches Gebiet

Die vorliegende Offenbarung betrifft allgemein das Gebiet der Kraftfahrzeug-Bremsanlagen. Genauer gesagt wird eine Sensorbaugruppe zur Verwendung mit einem Hauptzylinder einer solchen Bremsanlage beschrieben.

### Hintergrund

Es ist bereits seit langem bekannt, den Hauptzylinder mit einem oder mehreren Sensoren zu versehen. Beispielsweise ist der im Hauptzylinder herrschende Hydraulikdruck eine häufig interessierende Größe, und aus diesem Grund sind viele Hauptzylinder mit einem Hydraulikdrucksensor bestückt. Der sensorisch ermittelte Hydraulikdruck im Hauptzylinder kann zur Fahrerwunscherkennung herangezogen werden. Ferner kann aus dem Hauptzylinderdruck über ein Modell der Unterdruck in einem Unterdruck-Bremskraftverstärker berechnet und damit dessen Funktionsfähigkeit bestimmt werden.

In der DE 10 2004 013 191 A wird vorgeschlagen, im Hauptzylinder einen mit einer Unterdruckkammer eines Unterdruck-Bremskraftverstärkers kommunizierenden Unterdruckbereich vorzusehen und einen Unterdrucksensor in diesem Unterdruckbereich des Hauptzylinders anzuordnen. Eine besondere Ausgestaltung sieht vor, den Unterdrucksensor mit einem Positionssensor eines Bremslichtschalters in einer Sensorbaugruppe zu integrieren und die gesamte Sensorbaugruppe im Unterdruckbereich des Hauptzylinders vorzusehen.

Die aus der DE 10 2004 013 191 A bekannte Sensorbaugruppe umfasst ein fingerartiges Trägerelement, an dessen Spitze der Unterdrucksensor sowie der Positionssensor aufgenommen sind. Zur Positionierung der Sensoren im Unterdruckbereich des Hauptzylinders wird das Trägerelement mit den vorderseitig aufgenommenen Sensoren durch einen im Hauptzylinder ausgebildeten Kanal geführt, der in den Unterdruckbereich mündet.

Aus WO 02/43996 A1 ist eine Vorrichtung zum Ermitteln eines Pedalweges eines Bremspedals für eine Fahrzeugbremsanlage bekannt. Hierzu ist im Inneren eines Bremszylindergehäuses ein Magnetelement an einem Kolben angeordnet, welches mit einem außerhalb des Bremszylindergehäuses angeordneten Sensorelement sensorisch zusammenwirkt, um die Position und Bewegung des Kolbens zu erfassen. Ferner ist außerhalb des Bremszylindergehäuses eine Betätigungsermittlungseinrichtung angeordnet, die mit dem Magnetelement sensorisch zusammenwirkt, um den Beginn einer Betätigung des Kolbens zu erfassen.

Aus DE 198 55 358 A1 ist eine Vorrichtung zur Messung eines Bremspedalweges bekannt. Diese umfasst wenigstens einen analog arbeitenden Sensor sowie wenigstens einen inkrementell arbeitenden Sensor, welche zur Wegbestimmung herangezogen werden können. Gemäß einem Ausführungsbeispiel kann der wenigstens eine analog arbeitende Sensor als analoger Hall-Sensor und der wenigstens eine inkrementell arbeitende Sensorsystem als Hall-Schalter realisiert sein.

Es hat sich herausgestellt, dass ein Unterdrucksensor mit erheblichen Kosten verbunden ist. Aus diesem Grund ist es zumindest bei kostengünstigen Fahrzeugen wünschenswert, auf den Unterdrucksensor zu verzichten. Davon losgelöst hat sich ergeben, dass häufig zusätzlich zum Positionssensor auch noch ein Wegsensor verbaut wird, um den Bremspedalweg zu bestimmen. Dieser Wegsensor kann an unterschiedlichen Stellen im Bereich des Bremspedals verbaut sein und erfordert dezidierte Montage- und Verkabelungslösungen.

### Kurzer Abriss

Der Erfindung liegt die Aufgabe zugrunde, ein alternatives Konzept für eine Hauptzylinder-Sensorbaugruppe anzugeben, das einen oder mehrere der genannten oder anderweitige Nachteile bekannter Konzepte vermeidet.

Gemäß einem ersten Aspekt wird eine Sensorbaugruppe zur Verwendung mit einem Hauptzylinder bereitgestellt, der ein eingangsseitiges Betätigungselement aufweist, wobei mit dem Betätigungselement ein sensorisch erfassbares Signalgeberelement gekoppelt ist. Die Sensorbaugruppe umfasst einen Wegsensor zur Erfassung eines vom Betätigungselement zurückgelegten Weges, einen Positionssensor zur Erfassung des Erreichens einer vorgegebenen Position des Betätigungselements sowie eine Schaltungseinrichtung, die zur Kalibrierung des Wegsensors auf der Grundlage eines Ausgangssignals des Positionssensors ausgebildet ist, wobei das Kalibrieren bei Erfassen des Erreichens der vorgegebenen Position erfolgt, indem das Ausgangssignal des Wegsensors auf ein Referenzsignal bezogen wird.

Der Wegsensor kann dazu ausgebildet sein, ein analoges Signal (z.B. ein kontinuierliches Signal) bereitzustellen. Der Positionssensor kann dazu ausgebildet sein, ein binäres Signal (z.B. "ON"/"OFF") bereitzustellen.

Gemäß einer Realisierung weisen der Wegsensor und der Positionssensor einen Abstand voneinander auf. Dieser Abstand kann in Abhängigkeit einer Längenausdehnung des Signalgeberelements gewählt sein. Sowohl der Abstand zwischen dem Wegsensor und dem Positionssensor als auch die Längenausdehnung des Signalgeberelements können in einer Bewegungsrichtung des Betätigungselements oder des Signalgeberelements definiert sein.

Der Abstand zwischen dem Wegsensor und dem Positionssensor kann gemäß einer Variante ungefähr der halben Länge des Signalgeberelements entsprechen. Ein derartiger Abstand ist beispielsweise bei einem elektromagnetische Strahlung aussendenden Signalgeberelement (z.B. einem Magnetelement) vorteilhaft. Je nach Realisierung der Sensoren sowie des Signalgeberelements kann jedoch auch ein anderer Abstand zwischen dem Wegsensor und dem Positionssensor gewählt werden.

Der Wegsensor und der Positionssensor können dazu ausgebildet sein, elektromagnetische Strahlung, wie beispielsweise eine magnetische Flussdichte, zu erfassen. Bei einer solchen Implementierung kann der Wegsensor derart platziert sein, dass der Wegsensor in einer Ausgangsstellung des Betätigungselements ungefähr in einem Bereich eines (auf das Signalgeberelement zurückgehenden) Flussdichtemaximums liegt. Umfasst die Sensorbaugruppe einen weiteren, zweiten Wegsensor, kann der zweite Wegsensor derart platziert sein, dass er in einer Ausgangsstellung des Betätigungselements ungefähr in einem Bereich eines weiteren Flussdichtemaximums liegt. Ferner kann der Positionssensor derart platziert sein, dass der Positionssensor in einer Ausgangsstellung des Betätigungselements ungefähr in einem Bereich zwischen zwei Flussdichtemaxima liegt.

Der Positionssensor kann für unterschiedliche Aufgaben verwendet werden. Beispielsweise kann der Positionssensor Teil eines Bremslichtschalters sein. Alternativ oder zusätzlich hierzu kann der Positionssensor für andere Zwecke herangezogen werden. So kann der Positionssensor beispielsweise für Kalibrierungszwecke eingesetzt werden. Bei einer derartigen Implementierung kann die Sensorbaugruppe eine Schaltungseinrichtung umfassen, die zur Kalibrierung (eines Ausgangssignals) des Wegsensors auf der Grundlage eines Ausgangssignals des Positionssensors ausgebildet ist.

Der Wegsensor und der Positionssensor können auf unterschiedlichen physikalischen Prinzipien basieren. Neben beispielsweise optischen Sensoren kommen auch Sensoren für magnetische Strahlung, insbesondere zur Erfassung einer magnetischen Flussdichte, in Frage. So können die Sensoren aus einer Sensorgruppe ausgewählt sein, die die folgenden Sensoren umfasst: Hall-Sensor, AMR-Sensor, GMR-Sensor, CMR-Sensor und Reed-Relais. AMR steht für den anisotropen magnetoresistiven Effekt, GNR steht für den "gigantischen" magnetoresistiven Effekt und CMR steht für den "kolossalen" magnetoresistiven Effekt.

Die Sensorbaugruppe kann ferner einen optionalen Unterdrucksensor zur Erfassung eines Unterdrucks in einem zur Kommunikation mit einem Unterdruck-Bremskraftverstärker vorgesehenen Unterdruckbereich des Hauptzylinders umfassen. Es kann ferner ein Gehäuse vorgesehen sein, welches den Unterdrucksensor, den Wegsensor sowie den Positionssensor aufnimmt. Das Gehäuse kann eine Gehäuseöffnung besitzen, die eine Kommunikation des Unterdrucksensors mit dem Unterdruckbereich des Hauptzylinders gestattet. Ferner kann das Gehäuse eine Befestigungsanordnung zur Montage des Gehäuses außenseitig am Hauptzylinder besitzen.

Gemäß einem anderen Aspekt wird eine Hauptzylinderbaugruppe bereitgestellt, die einen Hauptzylinder sowie die hier vorgestellte Sensorbaugruppe umfasst. Der Hauptzylinder weist das eingangsseitige Betätigungselement auf, wobei zusätzlich ein mit dem Betätigungselement des Hauptzylinders gekoppeltes, sensorisch erfassbares Signalgeberelement vorgesehen ist.

Die Hauptzylinderbaugruppe kann ferner einen mit dem Betätigungselement des Hauptzylinders gekoppelten Stößel besitzen. Der Stößel kann das Signalgeberelement tragen und dazu vorgesehen sein, in einen im Bereich des Hauptzylinders ausgebildeten Kanal einzutauchen. Sofern der Hauptzylinder einen Unterdruckbereich besitzt, kann der Kanal ein Teil dieses Unterdruckbereichs sein.

Ebenfalls bereitgestellt wird ein Verfahren zum Betreiben einer Sensorbaugruppe zur Verwendung in Kombination mit einem Hauptzylinder, der ein eingangsseitiges Betätigungselement aufweist, mit dem ein sensorisch erfassbares Signalgeberelement gekoppelt ist, wobei die Sensorbaugruppe einen Wegsensor und einen Positionssensor aufweist. Das Verfahren umfasst die Schritte des Erfassens eines vom Betätigungselement zurückgelegten Weges mittels des Wegsensors, des Erfassens des Erreichens einer vorgegebenen Position des Betätigungselements mittels des Positionssensors und des Kalibrierens des Wegsensor auf der Grundlage eines Ausgangssignals des Positionssensors, wobei das Kalibrieren bei Erfassen des Erreichens der vorgegebenen Position erfolgt, indem das Ausgangssignal des Wegsensors auf ein Referenzsignal bezogen wird.

Das Verfahren kann ferner ein Abgleichen des zurückgelegten Wegs, der vom Wegsensor erfasst wurde, und des Erreichens der vorgegebenen Position, das vom Positionssensor erfasst wurde, umfassen. Ein derartiger Abgleich kann beispielsweise das Kalibrieren (eines Ausgangssignals) des Wegsensors auf der Grundlage eines Ausgangssignals des Positionssensors beinhalten. Das Kalibrieren erfolgt bei Erfassen des Erreichens der vorgegebenen Position (also beispielsweise an einem Schaltpunkt des Positionssensors). Zum Kalibrieren wird bei Erreichen der vorgegebenen Position das Ausgangssignal des Wegsensors auf ein Referenzsignal bezogen. In diesem Zusammenhang kann beispielsweise ein Verstärkungsfaktor für das Ausgangssignal des Wegsensors in Übereinstimmung mit dem Referenzsignal eingestellt werden.

Das Ausgangssignal des Positionssensors kann plausibilisiert werden. Dieses Plausibilisieren kann das redundante Auswerten eines anderen, auf einen Bremsvorgang hinweisenden Signals umfassen. Ein solches Signal kann beispielsweise von einem Längsbeschleunigungssensor oder einem Raddrehzahlsensor geliefert werden.

Auf der Grundlage eines Ausgangssignals des Wegsensors können weitere Größen bestimmt werden. Die Bestimmung dieser Größen ist insbesondere bei einer vorhergehenden Kalibrierung des Wegsensors (und gegebenenfalls einer Plausibilisierung dessen Ausgangssignals) besonders genau und zuverlässig. So kann auf der Grundlage eines Ausgangssignals des Wegsensors ein Bremspedalweg und/oder ein Unterdruck in einem Unterdruck-Bremskraftverstärker ermittelt werden. Die jeweilige Ermittlung kann auf der Grundlage einer mathematischen Berechnung (z.B. unter Verwendung eines mathematischen Modells) erfolgen.

### Kurze Beschreibung der Zeichnungen

Weitere Aspekte, Vorteile und Ausgestaltungen der vorliegenden Offenbarung ergeben sich aus der nachfolgenden Beschreibung mehrerer Ausführungsbeispiele sowie aus den Figuren. Es zeigen:
- Fig. 1: eine Schnittansicht eines Ausführungsbeispiels einer Hauptzylinderbaugruppe;
- Fig. 2: eine Ausschnittsvergrößerung aus Fig. 1, die ein erstes Ausführungsbeispiel einer Sensorbaugruppe zeigt;
- Fig. 3: ein zweites Ausführungsbeispiel einer Sensorbaugruppe;
- Fig. 4: ein erstes Ausführungsbeispiel einer Signalgeberkartusche für eine Sensorbaugruppe;
- Fig. 5: ein zweites Ausführungsbeispiel einer Signalgeberkartusche für eine Sensorbaugruppe;
- Fig. 6: ein weiteres Ausführungsbeispiel einer Hauptzylinderbaugruppe;
- Fig. 7: ein weiteres Ausführungsbeispiel einer Hauptzylinderbaugruppe;
- Fig. 8: ein schematisches Diagramm, welches den Verlauf der magnetischen Flussdichte für das Ausführungsbeispiel gemäß Fig. 8 veranschaulicht;
- Fig. 9: ein schematisches Diagramm, welches den Verlauf eines SensorAusgangssignals und die mögliche Wahl von Erfassungsbereichen veranschaulicht;
- Fig. 10: ein schematisches Diagramm, welches ein Kalibrierungskonzept veranschaulicht;
- Fig. 11: ein schematisches Diagramm, welches ein das Kalibrierungskonzept weiter veranschaulicht; und
- Fig. 12: ein schematisches Diagramm, welches die Bestimmung des Bremskraftverstärker-Unterdrucks auf der Grundlage des Bremspedalwegs veranschaulicht.

### Ausführungsbeispiele

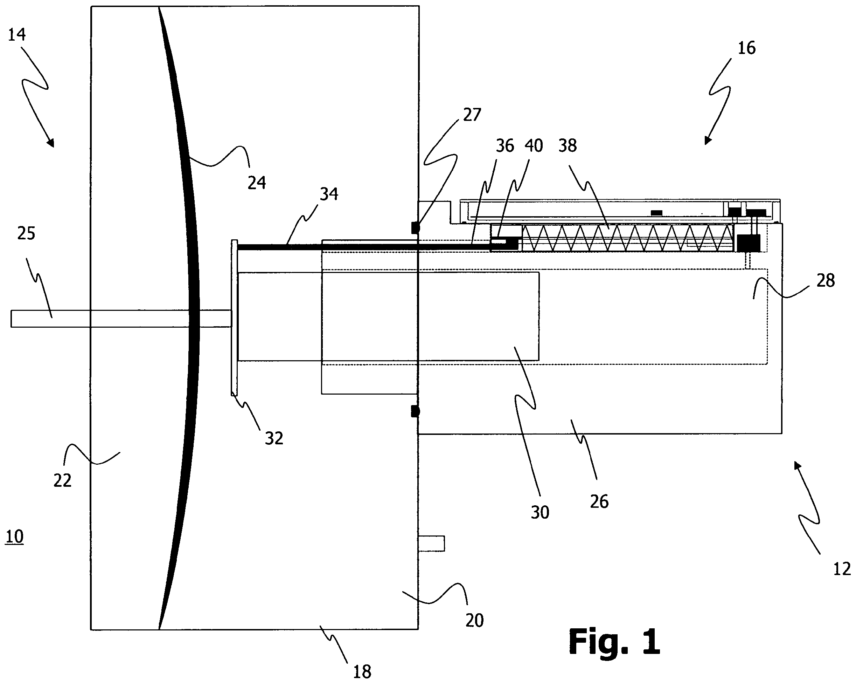

Fig. 1 zeigt ein Ausführungsbeispiel einer allgemein mit 10 bezeichneten Hauptzylinderbaugruppe für ein Kraftfahrzeug. Die Hauptzylinderbaugruppe 10 umfasst einen Hauptzylinder 12, einen am Hauptzylinder 12 stirnseitig befestigten Unterdruck-Bremskraftverstärker 14 sowie eine außenseitig am Hauptzylinder 12 montierte Sensorbaugruppe 16. Unterdruck-Bremskraftverstärker werden in Kraftfahrzeugen eingesetzt, um die vom Fahrer an einem Bremspedal aufgebrachte Fußkraft zu verstärken.

Der Unterdruck-Bremskraftverstärker 14 umfasst ein Gehäuse 18. Innerhalb des Gehäuses 18 sind eine Unterdruckkammer 20 sowie eine Arbeitskammer 22 ausgebildet. Die Arbeitskammer 22 ist von der Unterdruckkammer 20 mittels einer im Gehäuse 18 nach Art eines Kolbens verschiebbaren Membran 24 getrennt. Die Membran 24 wiederum ist in kraftübertragender Weise mit einer Eingangsstange 25 gekoppelt. Die Eingangsstange 25 wird mittels eines Bremspedals (nicht dargestellt) betätigt.

In der Unterdruckkammer 20 wird während des Fahrbetriebs ständig ein Unterdruck aufrechterhalten, während die Arbeitskammer 22 wahlweise mit der Unterdruckkammer 20 oder mit Atmosphärendruck verbunden werden kann. Solange die beiden Kammern 20, 22 miteinander verbunden sind, herrscht in beiden Kammern 20, 22 der gleiche Druck, und die Membran 24 befindet sich in ihrer Ausgangsstellung. Im Rahmen eines Bremsvorgangs wird die Arbeitskammer 22 von der Unterdruckkammer 20 fluidisch getrennt und darüber hinaus mit Atmosphärendruck verbunden. Der daraus resultierende Druckanstieg in der Arbeitskammer 22 führt zu einer Druckdifferenz an der Membran 24. Diese Druckdifferenz wiederum bewirkt eine Verschiebung der Membran 24 in Richtung der Unterdruckkammer 20 und damit eine Verstärkungskraft an der Eingangsstange 25 des Hauptzylinders 12.

Der Hauptzylinder 12 umfasst ein Gehäuse 26, welches über ein Dichtelement in Gestalt eines O-Rings 27 am Gehäuse 18 des Bremskraftverstärkers 14 befestigt ist. Im Gehäuse 26 ist eine Hydraulikkammer 28 ausgebildet. Innerhalb der Hydraulikkammer 28 ist ein mit der Eingangsstange 25 starr gekoppelter Betätigungskolben (Primärkolben) 30 verschieblich geführt. Mittels des Betätigungskolbens 30 kann innerhalb der Hydraulikkammer 28 ein Hydraulikdruck zur Betätigung von Radbremsen (nicht dargestellt) aufgebaut werden. Der Bremsdruckaufbau in der Hydraulikkammer 28 erfolgt durch Verschieben des Betätigungskolbens 30 in Fig. 1 nach rechts. Das Verschieben des Betätigungskolbens 30 erfolgt mittels der mit dem Bremspedal gekoppelten Eingangsstange 25 sowie der Membran 24. Auf den Betätigungskolben 30 wirken hierbei zum einen die vom Fahrer in das Bremspedal eingeleitete Fußkraft und zum anderen die vom Bremskraftverstärker 14 (auf herkömmliche Weise) erzeugte Verstärkungskraft.

Wie aus Fig. 1 ersichtlich, ist am Betätigungskolben 30 an seiner der Eingangsstange 25 zugewandten Stirnfläche ein Tellerelement 32 befestigt. Das Tellerelement 32 ist konzentrisch zum Betätigungskolben 30 angeordnet und ragt in radialer Richtung über den Betätigungskolben 30 hinaus. In der Nähe des Außenumfangs des Tellerelements 32 ist ein sich parallel zum Betätigungskolben 30 in Richtung des Hauptzylindergehäuses 26 erstreckender Stößel 34 starr befestigt. Der Stößel 34 ist als stangenartiges Element ausgebildet und erstreckt sich über einen im Gehäuse 26 ausgebildeten Kanal 36 in eine ebenfalls im Gehäuse 26 ausgebildete Ausnehmung 38. An seinem dem Tellerelement 32 abgewandten Ende trägt der Stößel 34 ein Signalgeberelement 40 zur Erfassung mittels der Sensorbaugruppe 16. Aufgrund der starren Kopplung des Stößels 34 mit dem Betätigungskolben 30 überträgt sich jegliche translatorische Bewegung des Betätigungskolbens 30 unmittelbar auf das Signalgeberelement 40. Aus diesem Grund ermöglicht eine Erfassung einer Bewegung oder Position des Signalgeberelements 40 mittels der Sensorbaugruppe 16 eine Aussage über eine Bewegung oder Position des Betätigungskolbens 30.

Das Signalgeberelement 40 kann in anderen Ausführungsbeispielen prinzipiell auf andere Art und Weise starr mit einem Betätigungselement (z.B. der Eingangsstange 25 oder dem Betätigungskolben 30) des Hauptzylinders 12 gekoppelt werden. Im einfachsten Fall ist das Signalgeberelement 40 unmittelbar mit dem Betätigungselement gekoppelt oder sogar mit dem Betätigungselement identisch. Alternativ hierzu kann das Signalgeberelement 40 auch an einer starr mit dem Betätigungselement gekoppelten Struktur vorgesehen werden. Bei dieser Struktur kann es sich beispielsweise - wie im Ausführungsbeispiel gemäß Fig. 1 gezeigt - um einen mit dem Betätigungselement gekoppelten Stößel 34 handeln

Wie in Fig. 1 gezeigt, sind die Eingangsstange 25, das Tellerelement 32, der Stößel 34 sowie der Betätigungskolben 30 zumindest teilweise in der Unterdruckkammer 20 des Bremskraftverstärkers 14 angeordnet. Ferner ist über den mit der Unterdruckkammer 20 kommunizierenden Kanal 36 sowie die mit dem Kanal 36 kommunizierende Ausnehmung 38 des Hauptzylindergehäuses 26 ein Unterdruckbereich im Hauptzylinder 12 definiert. Der Stößel 34 mit dem daran angebrachten Signalgeberelement 40 taucht in diesen Unterdruckbereich ein.

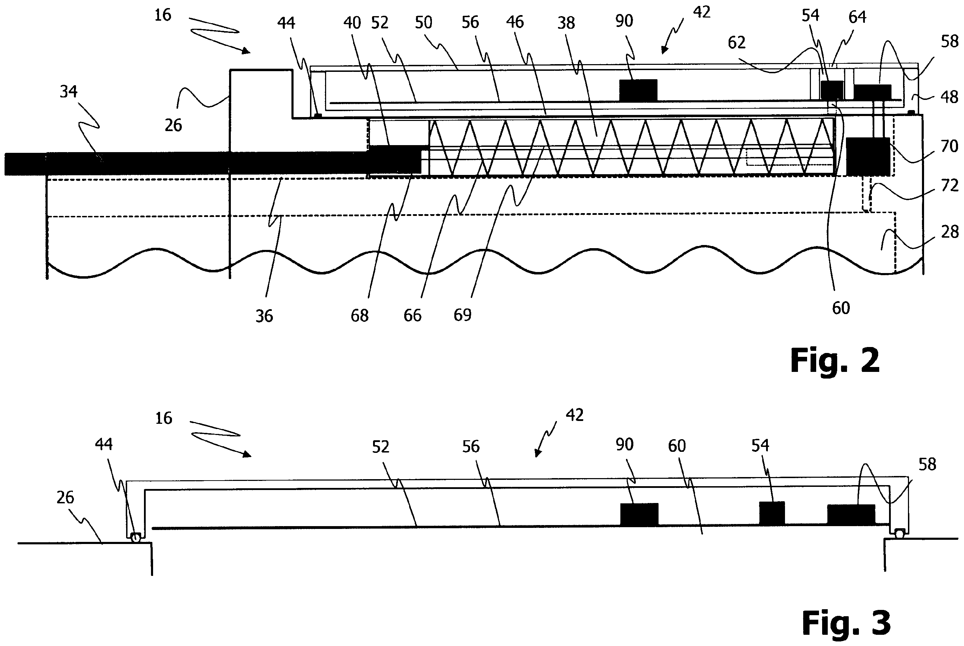

Um einen Unterdruckverlust in der Unterdruckkammer 20 durch Eintritt von Atmosphärenluft in den Unterdruckbereich des Hauptzylinders 26 zu verhindern, ist die Ausnehmung 38 des Hauptzylindergehäuses 26 unterdruckdicht mittels der Sensorbaugruppe 16 verschlossen. Dieser Sachverhalt sowie die Konfiguration der Sensorbaugruppe 16 wird im Folgenden anhand von Fig. 2 näher erläutert. Fig. 2 zeigt eine Ausschnittsvergrößerung der Fig. 1 im Bereich der Sensorbaugruppe 16.

Wie in Fig. 2 dargestellt, umfasst die Sensorbaugruppe 16 ein Gehäuse 42, welches außenseitig am Gehäuse 26 des Hauptzylinders 12 montiert ist. Die Montage des Gehäuses 42 der Sensorbaugruppe 16 am Hauptzylindergehäuse 26 erfolgt derart, dass die Ausnehmung 38 im Hauptzylindergehäuse 26 unterdruckdicht verschlossen wird. Zu diesem Zweck ist ein Dichtelement 44 um die Ausnehmung 38 herum zwischen dem Gehäuse 42 der Sensorbaugruppe 16 und dem Hauptzylindergehäuse 26 vorgesehen. Auf diese Weise wird verhindert, dass Luft aus der Umgebung über die Ausnehmung 38 und den Kanal 36 im Hauptzylindergehäuse 26 in die Unterdruckkammer 20 des Bremskraftverstärkers 14 eindringt.

Im Ausführungsbeispiel gemäß Fig. 2 ist das Gehäuse 42 der Sensorbaugruppe 16 mittels Schrauben (nicht gezeigt) am Hauptzylindergehäuse 26 befestigt. Aufgrund des im Unterdruckbereich des Hauptzylinders 12 herrschenden Ansaugeffekts kann das Gehäuse 42 aber auch unter Verwendung weniger stabiler Befestigungsanordnungen außenseitig am Hauptzylinder 12 montiert werden. So kämen beispielsweise auch Klapp- oder Rastverbindungen für die Montage des Gehäuses 42 in Frage.

Im Ausführungsbeispiel gemäß Fig. 2 umfasst das Gehäuse 42 ein erstes Gehäuseelement, welches eine Unterseite 46 und Seitenwand 48 des Gehäuses 42 definiert, sowie ein zweites Gehäuseelement, welches als Deckel 50 ausgebildet ist und das erste Gehäuseelement oberseitig verschließt. Im Gehäuse 42 ist eine Leiterplatte 52 (Printed Circuit Board, PCB) aufgenommen. Auf der Leiterplatte 52 sind ein Unterdrucksensor 54, ein linear oder flächig ausgebildeter Wegsensor 56 sowie eine Schaltungseinrichtung 58 montiert. Ferner ist auf der Leiterplatte ein Positionssensor 90 montiert.

Der Unterdrucksensor 54 gestattet die Erfassung eines Unterdrucks im Unterdruckbereich des Bremskraftverstärkers 12. Zu diesem Zweck ermöglicht eine in der Unterseite 46 des Gehäuses 42 ausgebildete Öffnung 60 eine Kommunikation des Unterdrucksensors 54 mit der im Hauptzylindergehäuse 26 ausgebildeten Ausnehmung 38 und damit - über den Kanal 36 - mit der Unterdruckkammer 20 des Bremskraftverstärkers 16. Der Unterdrucksensor 54 (bzw. die Leiterplatte 52) verschließt die Gehäuseöffnung 60 unterdruckdicht bezüglich eines Innenraums des Gehäuses 42 der Sensorbaugruppe 16.

Wie in Fig. 2 gezeigt, ist der Unterdrucksensor 54 selbst in einer im Innenraum des Gehäuses 42 ausgebildeten Kammer 64 angeordnet. Der Gehäusedeckel 50 weist im Bereich der Kammer 62 eine Deckelöffnung 64 auf. Aus diesem Grund herrscht im Inneren der Kammer 62 Atmosphärendruck, um eine druckdifferenzbasierte Unterdruckerfassung mittels des Unterdrucksensors 54 zu ermöglichen. Die Kammer 62 selbst ist unterdruckdicht bezüglich des restlichen Innenraums des Gehäuses 42 abgedichtet.

Der Wegsensor 56 ist linear oder flächig auf der Leiterplatte 52 ausgebildet und daher in der Schnittansicht gemäß Fig. 2 nicht unmittelbar erkennbar. Im Ausführungsbeispiel gemäß Fig. 2 ist der Wegsensor 56 als kontinuierlicher bzw. linearer Hall-Sensor zur Erfassung eines vom Betätigungskolben 30 zurückgelegten Wegs ausgelegt. Die Erfassung des vom Betätigungskolben 30 zurückgelegten Wegs erfolgt indirekt über eine Erfassung des zurückgelegten Wegs des starr mit dem Betätigungskolben 30 gekoppelten Signalgeberelements 40. Das Signalgeberelement 40 ist im vorliegenden Ausführungsbeispiel als Dauermagnet realisiert, dessen Magnetfeld mittels des als Hall-Sensor ausgelegten Wegsensors 56 erfasst wird.

Der Positionssensor 90 ermöglicht die Erfassung des Erreichens einer vorgegebenen Position des Signalgeberelements 40 (und damit des Betätigungskolbens 30). Der Positionssensor 90 kann beispielsweise Teil eines Bremslichtschalters (nicht dargestellt) und als binärer (schaltender) Hall-Sensor ausgelegt sein.

Die Schaltungseinrichtung 58 ist elektrisch sowohl mit dem Unterdrucksensor 54 als auch dem Wegsensor 56 und dem Positionssensor 90 gekoppelt und beinhaltet geeignete Signalaufbereitungsschaltungen für die drei Sensoren 54, 56, 90. In einer Ausführungsform ist die Schaltungseinrichtung 58 als ASIC (Application Specific Integrated Circuit) ausgebildet.

Die Schaltungseinrichtung 58 stellt ihre Ausgangssignale über einen in Fig. 2 nicht dargestellten gemeinsamen elektrischen Anschluss (beispielsweise einen mehrpoligen elektrischen Stecker) einer externen Steuereinheit zur Verfügung. Hinsichtlich der elektrischen Schnittstellen stehen unterschiedliche Konfigurationen zur Verfügung (z.B. CAN, SENT, PSI5, PAS4, PWM, analog, usw.). Bei der externen Steuereinheit kann es sich um ein Steuergerät (Electronic Control Unit, ECU) handeln. Gemäß einer alternativen Ausgestaltung umfasst die Schaltungseinrichtung 58 selbst die erforderlichen Steuergerätfunktionalitäten gemäß dem "Smart Sensor"-Konzept. Die Schaltungseinrichtung 58 kann in diesem Fall (beispielsweise über einen CAN-Bus) an ein übergeordnetes Regelsystem angebunden sein.

Wie in Fig. 2 zu erkennen, ist in der Ausnehmung 38 ein als Schraubenfeder ausgebildetes Federelement 66 angeordnet, welches auf den das Signalgeberelement 40 tragenden Stößel 34 eine Rückstellkraft (in Fig. 2 nach links) ausübt. Mittels des Federelements 66 wird gewährleistet, dass nach Abschluss eines Bremsvorgangs der Stößel 34 mit dem Signalgeberelement 40 stets wieder in seine in Fig. 2 gezeigte Ausgangsstellung zurückkehrt. Das Signalgeberelement 40 ist über einen Schlitten 68 am Stößel 34 montiert. Der Schlitten 68 wiederum ist in einer Nut 69, die in einer Seitenwand der Ausnehmung 38 oder einer separaten Signalgeberkartusche ausgebildet ist, geführt beweglich.

Im Ausführungsbeispiel gemäß Fig. 2 ist in der Ausnehmung 38 des Hauptzylindergehäuses 36 ferner ein Hydraulikdrucksensor 70 vorgesehen. Der Hydraulikdrucksensor 70 ist am Grund der Ausnehmung 38 befestigt und kommuniziert über eine Bohrung 72 mit der Hydraulikkammer 28. Die Bohrung 72 wird mittels des Drucksensors 70 hydraulikdicht bezüglich der Ausnehmung 38 abgedichtet. Wie in Fig. 2 gezeigt, wird der Hydraulikdrucksensor 70 von der Schaltungseinrichtung 58 elektrisch kontaktiert. Ähnlich wie in Bezug auf die Sensoren 54, 56, 90 beschrieben, beinhaltet die Schaltungseinrichtung 58 eine Signalaufbereitungsschaltung auch für den Hydraulikdrucksensor 70 und liefert ein entsprechendes Ausgangssignal, das über den gemeinsamen elektrischen Anschluss abgegriffen werden kann.

In dem in Fig. 2 dargestellten Ausführungsbeispiel der Sensorbaugruppe 16 muss der Innenraum des Gehäuses 42 nicht notwendigerweise vakuumdicht ausgebildet sein. Das unterdruckdichte Verschließen des Unterdruckbereichs des Hauptzylinders 12 erfolgt nämlich über die Gehäuseunterseite 46 in Kombination mit dem umlaufenden Dichtelement 44 zwischen der Gehäuseunterseite 46 und dem Hauptzylindergehäuse 26. Ein Unterdruckleck über die Gehäuseöffnung 60 wird dadurch verhindert, dass die Gehäuseöffnung 60 unterdruckdicht mittels des Unterdrucksensors 54 (bzw. der Leiterplatte 52) verschlossen ist. Fig. 3 zeigt ein zweites Ausführungsbeispiel der Sensorbaugruppe 16, bei dem auch im Innenraum des Gehäuses 42 ein Unterdruck herrscht. Im Folgenden werden ähnliche Elemente mit denselben Bezugszeichen wie im ersten Ausführungsbeispiel versehen.

Bei dem in Fig. 3 dargestellten Ausführungsbeispiel der Sensorbaugruppe 16 ist aufgrund einer anderweitigen Konfiguration des Unterdrucksensors 54 keine druckdifferenzbasierte Unterdruckerfassung erforderlich. Aus diesem Grund kann auch im Innenraum des Gehäuses 42 ein Unterdruck herrschen und die Gehäuseform daher vereinfacht werden. Das Gehäuse 42 umgibt im Ausführungsbeispiel gemäß Fig. 3 den Unterdrucksensor 54, den Wegsensor 56 und den Positionssensor 90 lediglich seitlich und oben. Der Unterdruckbereich des Hauptzylinders 26 kann sich daher bis in den Innenraum des Gehäuses 42 fortsetzen.

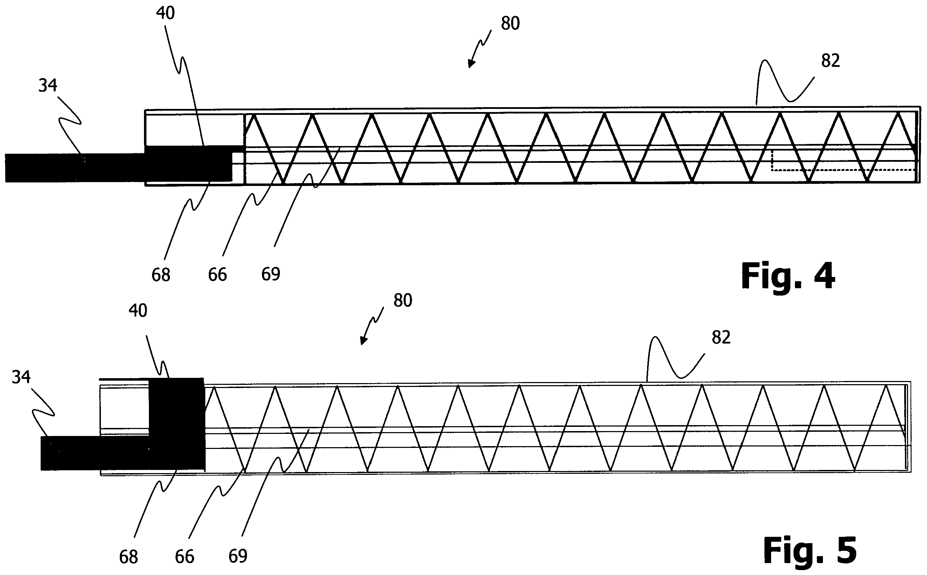

Bei dem Ausführungsbeispiel gemäß Fig. 2 kann das Signalgeberelement 40 in einer Kartusche zum Einsetzen in der Ausnehmung 38 des Hauptzylindergehäuses 26 vorgesehen werden. Fig. 4 zeigt ein Ausführungsbeispiel einer solchen Kartusche 80. Wie in Fig. 4 gezeigt, umfasst die Kartusche 80 ein Kartuschengehäuse 82, das im Inneren einen Kanal für eine translatorische Bewegung des Signalgeberelements 40 definiert. In der Kartusche 80 ist das Signalgeberelement 40 auf dem Schlitten 68 vorkonfiguriert und wird von dem Federelement 66 in seine Ausgangsstellung gemäß Fig. 4 vorgespannt. Innerhalb des Kartuschengehäuses 82 ist die Nut 70 für eine geführte Bewegung des Schlittens 68 ausgebildet. Zur Montage der Kartusche 80 wird diese in einem ersten Schritt in die Ausnehmung 38 des Hauptzylindergehäuses 26 eingesetzt. In einem zweiten Schritt wird der Stößel 34 mit dem Schlitten 68 gekoppelt (zum Beispiel mittels einer Rast-, Steck- oder Bajonett-Verbindung). Das Kartuschengehäuse 82 besitzt eine in Fig. 4 nicht dargestellte Öffnung, um eine Kommunikation des Unterdrucksensors 54 mit dem Innenraum des Kartuschengehäuses 82 und damit dem Unterdruckbereich des Hauptzylinders 12 zu ermöglichen.

Fig. 5 zeigt ein weiteres Ausführungsbeispiel einer Kartusche 80. Während es sich bei dem Signalgeberelement 40 gemäß Fig. 4 um ein Magnetelement zur Erfassung mittels eines Hall-Sensors handelt, zeigt Fig. 5 ein Signalgeberelement 40 in Gestalt eines außerhalb des Kartuschengehäuses 82 liegenden Reflektors, Transducer oder einer ähnlichen Komponente. Der Wegsensor 56 und der Positionssensor 90 werden entsprechend angepasst.

Die in den Fign. 4 und 5 dargestellten Kartuschen 80 können entweder eine separate Baugruppe bilden oder aber mit der Sensorbaugruppe 16 zu einer einzigen Baugruppe kombiniert werden. Bei der zuletzt genannten Realisierung ist keine separate Befestigungsanordnung für die Kartusche 80 erforderlich. Die Kartusche 80 kann vielmehr zusammen mit dem Gehäuse 42 der Sensorbaugruppe 16 am Hauptzylinder 12 montiert werden.

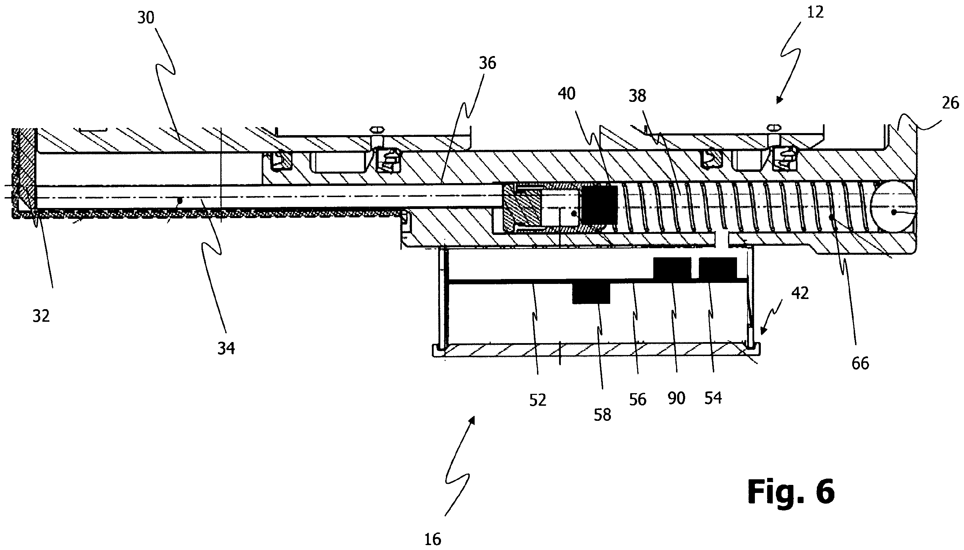

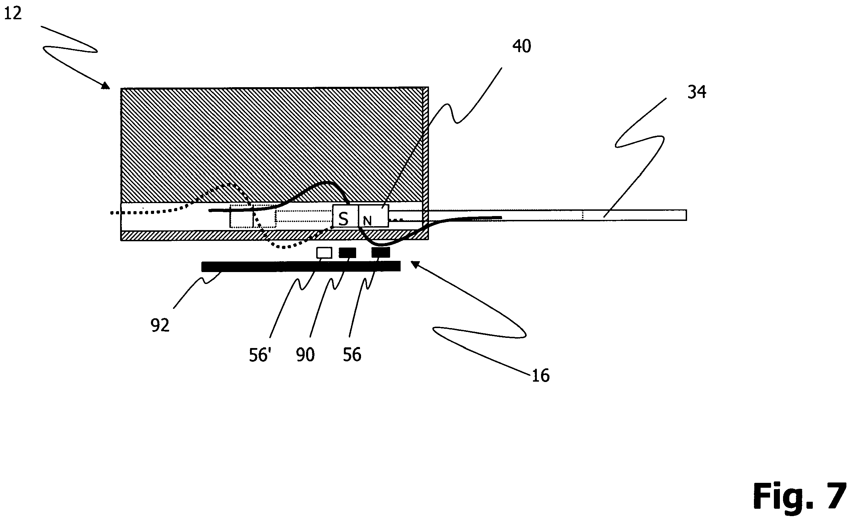

Die Fign. 6 und 7 zeigen weitere Ausführungsbeispiele einer Hauptzylinderbaugruppe 10. Im Ausführungsbeispiel gemäß Fig. 6 umfasst die Sensorbaugruppe 16 wieder einen Unterdrucksensor 54, einen Wegsensor 56 und einen Positionssensor 90. Im Ausführungsbeispiel gemäß Fig. 7 umfasst die Sensorbaugruppe 16 hingegen keinen Unterdrucksensor, aber zusätzlich zum Wegsensor 56 und Positionssensor 90 einen weiteren Wegsensor 56'.

Wie bereits erläutert ermöglicht der Positionssensor 90 die Erfassung des Erreichens einer vorgegebenen Position des Signalgeberelements 40 und damit des Betätigungskolbens 30 (bzw. des damit gekoppelten Bremspedals). Der Positionssensor 90 ist in den Ausführungsbeispielen gemäß Fig. 6 und Fig. 7 Teil eines Bremslichtschalters (nicht dargestellt).

Der Positionssensor 90 kann zwei Schaltzustände einnehmen und beispielsweise als binärer (schaltender) Hall-Sensor ausgelegt sein. Der Wegsensor 56 kann hingegen ein kontinuierlicher Hall-Sensor sein. In einer Implementierung umfasst der als binärer Hall-Sensor ausgelegte Positionssensor 90 einen kontinuierlichen Hall-Sensor und einen dem kontinuierlichen Hall-Sensor nachgeschalteten Komparator. Der Komparator unterzieht das Ausgangssignal des kontinuierlichen Hall-Sensors einer Schwellenwert-Entscheidung und gibt in Abhängigkeit der Entscheidung entweder eine logische "0" ("OFF)" oder eine logische "1" ("ON") aus.

Während der Wegsensor 56 somit ein analoges (kontinuierliches) Signal bereitstellt, das einen Ausschnitt des Wegs des Betätigungskolbens 30 (und somit des Pedalwegs) repräsentiert, liefert der Positionssensor 90 ein ON/OFF-Signal. Diese ON/OFF-Signal kann für das Ein- und Ausschalten des Bremslichts herangezogen werden kann. Zusätzlich oder alternativ hierzu ist jedoch auch möglich, unter Heranziehung des ON/OFF-Signals des Positionssensors 90 das analoge Signal des Wegsensors 56 zu kalibrieren, um so ein Pedalwegsignal mit ausreichender Genauigkeit nachzubilden.

Bei gewissen Anwendungen kann der Pedalweg auf der Grundlage eines Ausgangssignals des Wegsensors 56 ermittelt und ein separater Pedalwegsensor kann so eingespart werden. Die Pedalwegerfassung ist eine wesentliche Voraussetzung für die Implementierung einer elektrohydraulischen Bremsanlage, einer regenerativen Bremsanlage ("Hybrid-Bremsanlage") oder ähnlicher Konzepte. Daher kann die hier vorgestellte Sensorbaugruppe auch im Zusammenhang mit solchen Bremsanlagen zum Einsatz gelangen.

Im Folgenden werden unter Bezugnahme auf das Ausführungsbeispiel gemäß Fig. 7 beispielhafte Konzepte für die Wegerfassung sowie die Positionserfassung bei einem als Magnetelement ausgebildeten Signalgeberelement 40 erläutert. Wie bereits oben angemerkt, können prinzipiell jedoch auch solche Signalgeberelemente verwendet werden, die auf anderen physikalischen (z.B. optischen) Konzepten basieren.

Bei dem Ausführungsbeispiel gemäß Fig. 7 besteht der Hauptzylinder 12 aus einem nicht magnetischen Material wie Aluminium. Das Signalgeberelement 40 umfasst einen Dauermagneten aus beispielsweise einer Neodym-Eisen-Bor-Legierung. Die Magnetisierungsrichtung des Signalgeberelements 40 verläuft parallel zur translatorischen Bewegungsrichtung des Stößels 34 (wie in Fig. 7 durch den magnetischen Südpol "S" sowie den magnetischen Nordpol "N" veranschaulicht). In Fig. 7 ist der resultierende Verlauf der magnetischen Flussdichte in der Ausgangsstellung des Stößels 34 bzw. des Betätigungskolbens 30 (durchgezogene Linie), also bei nicht betätigtem Bremspedal, sowie in einer Betätigungsstellung des Stößels 34 bzw. des Betätigungskolbens 30 (gepunktete Linie), also bei betätigtem Bremspedal, veranschaulicht.

Unterhalb dieses Positionssensors 90, des Wegsensors 56 sowie des optionalen weiteren Wegsensors 56' ist ein Flussleitblech 92 aus einem weichmagnetischen Material von hoher magnetischer Permeabilität angeordnet. Das Flussleitblech 92 schirmt die Sensoren 56, 56', 90 vor äußeren Störfeldern ab und ermöglicht daher eine höhere Messgenauigkeit. Das Flussleitblech 92 kann beispielsweise aus µ-Metall gefertigt sein.

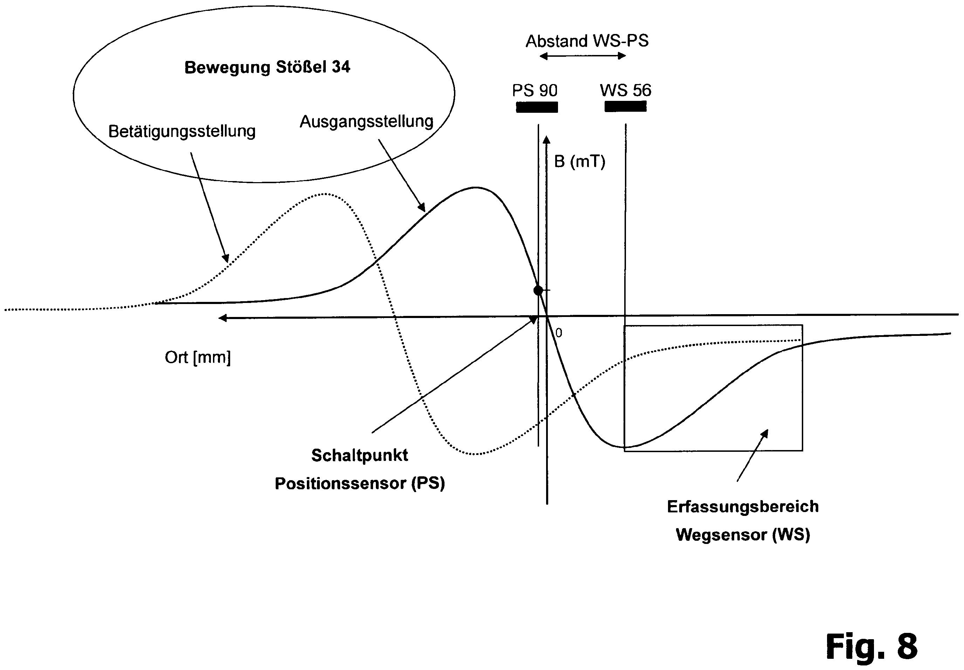

Die in Fig. 7 nur schematisch eingezeichneten Verläufe der magnetischen Flussdichte sind in dem Diagramm von Fig. 8 deutlicher dargestellt. Genauer gesagt veranschaulicht Fig. 8 den ortsabhängigen Verlauf der magnetischen Flussdichte B entlang einer parallel zum Stößel 34 verlaufenden und sowohl den Wegsensor 56 als auch den Positionssensor 90 enthaltenden Geraden. Die gestrichelte Linie veranschaulicht wie in Fig. 7 den Flussdichteverlauf in der Ausgangsstellung des Stößels 34 bei nicht betätigtem Bremspedal. Die gepunktete Linie kennzeichnet den Flussdichte-Verlauf in der Betätigungsstellung des Stößels 34, also bei betätigtem Bremspedal.

Deutlich zu erkennen ist die Tatsache, dass der Flussdichte-Verlauf zwei Maxima aufweist. Die beiden Maxima sind im Bereich der beiden Pole des magnetischen Signalgeberelements 40 angeordnet. Die Flussdichte besitzt im Abschnitt zwischen den beiden Maxima einen annähernd linearen Verlauf. Ferner weist die Flussdichte im Bereich jenseits der beiden Maxima jeweils einen asymptotisch monotonen Verlauf auf.

In Fig. 8 ist auch die Lage des Wegsensors 56 sowie des Positionssensors 90 bezüglich des Flussdichteverlaufs dargestellt. Deutlich zu erkennen ist der Sachverhalt, dass der Abstand zwischen dem Wegsensor 56 und dem Positionssensor 90 in Abhängigkeit einer Längenausdehnung des Signalgeberelements 40 gewählt ist. Genauer gesagt entspricht der Abstand zwischen dem Wegsensor 56 und dem Positionssensor 90 ungefähr der halben Länge des Signalgeberelements 40. Dieser Sachverhalt ist daran zu erkennen, dass der Wegsensor 56 in der Ausgangsstellung des Stößels 34 ungefähr im Bereich einer Flussdichtemaximums liegt, während der Positionssensor 90 in der Ausgangsstellung ungefähr im Bereich zwischen den beiden Flussdichtemaxima liegt.

Aus den oben erläuterten Lagen des Wegsensors 56 sowie des Positionssensors 90 bezüglich des Flussdichteverlaufs ergeben sich der in Fig. 8 eingezeichnete Schaltpunkt des Positionssensors 90 und Erfassungsbereich des Wegsensors 56. In der Ausgangsstellung des Stößels 34 befindet sich der Positionssensor 90 in demjenigen Flussdichteabschnitt, der einen steilen linearen Verlauf besitzt. Bereits eine geringfügige Bewegung des Stößels 34 aus seiner Ausgangsstellung heraus bewirkt daher eine starke Änderung der magnetischen Durchflutung des Positionssensors 90, was zu einer hohen Erfassungsgenauigkeit führt. Wie in Fig. 8 erkennbar, kann der Schaltpunkt des Positionssensors 90 daher sehr nahe am Wendepunkt des Flussdichteverlaufs positioniert werden.

Der Erfassungsbereich des Wegsensors 56 ist hingegen derart gewählt, dass er sich vom Ort der höchsten magnetischen Durchflutung (Flussdichtemaximum) in Richtung des asymptotisch monotonen Verlaufs erstreckt. Wird der Stößel 34 gegenüber seiner Ausgangsstellung in Richtung der Endstellung verschoben, entfernt sich das Signalgeberelement 40 vom Wegsensor 56, woraus eine monotone Abnahme der magnetischen Durchflutung des Wegsensors 56 (und ein entsprechender monotoner Verlauf eines Sensor-Ausgangssignals) resultiert. Die magnetische Flussdichte weist in dem in Fig. 8 veranschaulichten Erfassungsbereich einen weniger steilen Verlauf als in dem Bereich zwischen den beiden Flussdichtemaxima auf. Dies schmälert zwar zu einem gewissen Grad die Messgenauigkeit, jedoch zugunsten eines deutlich größeren Messbereichs mit sich monoton ändernder magnetischen Durchflutung.

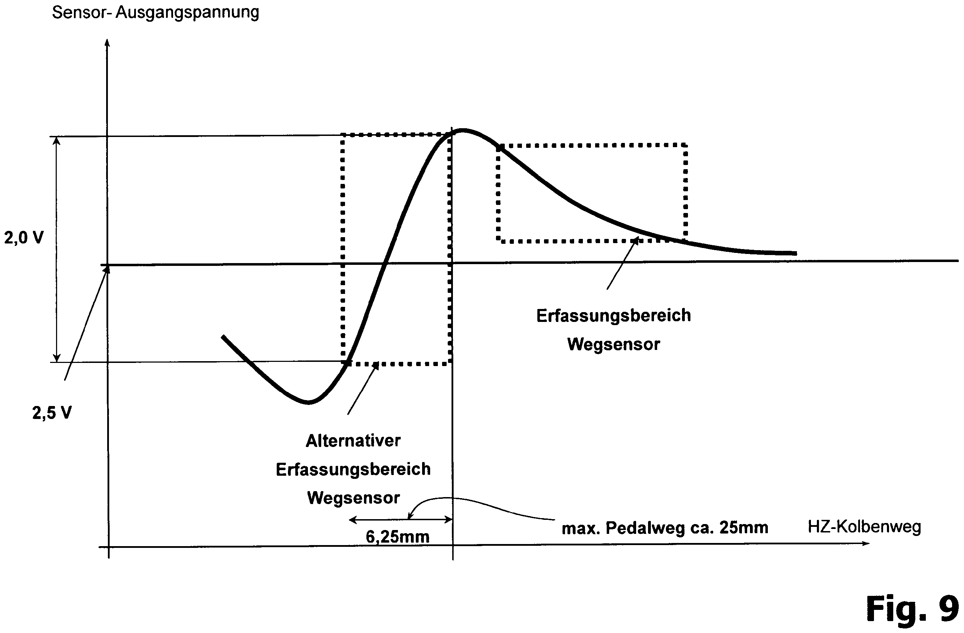

Fig. 9 veranschaulicht den Verlauf eines Ausgangsignals des Wegsensors 56, nämlich der Sensor-Ausgangsspannung, in Abhängigkeit des vom Stößel 34 und damit vom Betätigungskolben 30 des Hauptzylinders 12 zurückgelegten Weg. Der vom Betätigungskolben 30 zurückgelegte Weg ist direkt proportional zum Pedalweg, so dass sich aus dem vom Betätigungskolben 30 zurückgelegten Weg über einen Proportionalitätsfaktor der Pedalweg bestimmen lässt. Der vom Betätigungskolben 30 zurückgelegte Weg wiederum ist aus der Änderung der Sensor-Ausgangsspannung des Wegsensors 56 unter Zuhilfenahme des in Fig. 9 dargestellten Diagramms zu ermitteln.

In Fig. 9 sind sowohl der in Fig. 8 veranschaulichte Erfassungsbereich des Wegsensors 56 als auch ein alternativer Erfassungsbereich für den Wegsensor 56 eingezeichnet. Der alternative Erfassungsbereich ist zwischen den beiden Flussdichtemaxima angeordnet. Wie bereits oben erläutert, ermöglicht der alternative Erfassungsbereich eine höhere Genauigkeit der Wegerfassung, jedoch möglicherweise auf Kosten des maximal erfassbaren Wegs des Betätigungskolbens 30. Selbstverständlich könnte auch die in Fig. 8 veranschaulichte Lage des Positionssensors 90 geändert werden, beispielsweise wie in Fig. 8 für den Wegsensor 56 veranschaulicht.

Wie im Ausführungsbeispiel gemäß Fig. 7 gezeigt, kann zusätzlich zum Wegsensor 56 ein weiterer Wegsensor 56' vorgesehen sein, der bezüglich des Wegsensors 56 räumlich versetzt entlang der Bewegungsrichtung des Stößels 34 angeordnet ist. Der Wegsensor 56 ist im Bereich eines ersten Maximums des Flussdichteverlaufs und der weitere Sensor 56' im Bereich des zweiten Maximums vorgesehen. Die Erfassung und Auswertung der Ausgangssignale beider Wegsensoren 56, 56' erhöht die Genauigkeit der Wegerfassung. Darüber hinaus wird es möglich, die Ausgangssignale beider Wegsensoren 56, 56' gegeneinander zu plausibilisieren. Auf diese Weise kann der Ausfall eines Wegsensors 56, 56' erkannt werden. Ferner erhöht die Redundanz die Zuverlässigkeit der Sensorbaugruppe 12. Obwohl im Ausführungsbeispiel gemäß Fig. 7 nicht dargestellt, könnte in ähnlicher Weise ein redundanter Positionssensor vorgesehen werden.

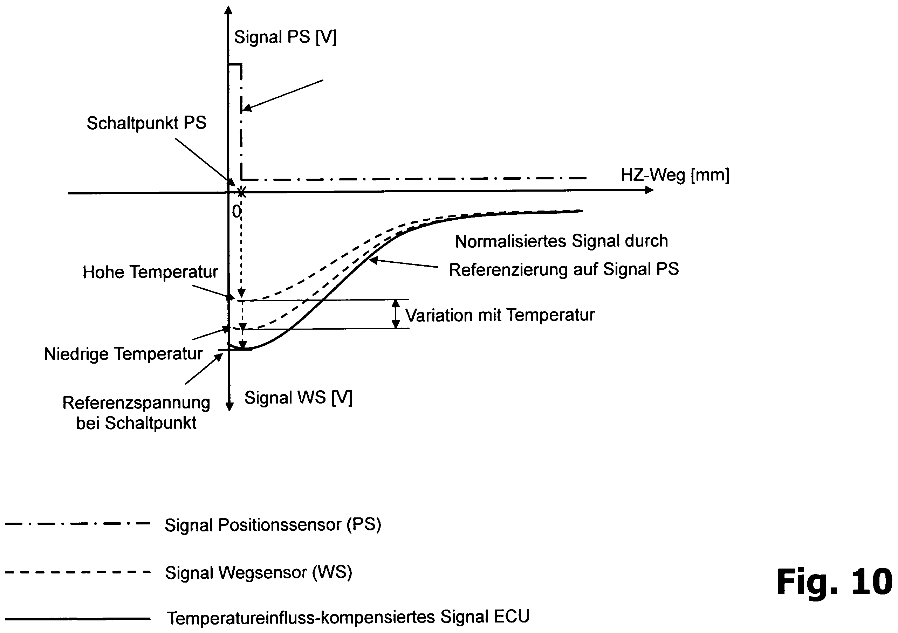

Im Folgenden wird unter Bezugnahme auf das Diagramm gemäß Fig. 10 die Kalibrierung des Wegsensors 56 auf der Grundlage eines Ausgangssignals des Positionssensors 90 erläutert. Mittels dieser Kalibrierung lässt sich insbesondere die Temperatur-Abhängigkeit der Wegmessung deutlich reduzieren.

Das Diagramm gemäß Fig. 10 veranschaulicht in der oberen Hälfte das Ausgangssignal (Ausgangsspannung) des Positionssensors 90 und in der unteren Hälfte das Ausgangssignal (Ausgangsspannung) des Wegsensors 56 in Abhängigkeit des von dem Betätigungskolben 30 aus seiner Ausgangsstellung heraus zurückgelegten Wegs. Wie in Fig. 10 gezeigt, zeigt das Ausgangssignal des Positionssensors 90 den erwarteten binären Verlauf mit einem Sprung des Signalpegels an einem vordefinierten Schaltpunkt. In der Praxis hat sich herausgestellt, dass die Lage des Schaltpunkts keine signifikante Temperatur-Abhängigkeit aufweist.

Der in der unteren Hälfte des Diagramms der Fig. 10 dargestellte Verlauf des Ausgangssignals des Wegsensors 56 zeigt den erwarteten kontinuierlichen Verlauf in Übereinstimmung mit der kontinuierlichen Änderung der magnetischen Durchflutung des Wegsensors 56. Deutlich zu erkennen ist die starke Abhängigkeit des Verlaufs des Ausgangssignals des Wegsensors 56 von der Temperatur.

Um die Temperatur-Abhängigkeit des Ausgangssignals des Wegsensors 56 zu kompensieren, wird ein Kalibrieren dieses Ausgangssignals auf der Grundlage des im Wesentlichen temperaturunabhängigen Schaltpunkts des Positionssensors 90 vorgeschlagen. Genauer gesagt wird bei Erfassen des Schaltpunkts des Positionssensors 90 das Ausgangssignal des Wegsensors 56 auf ein Referenzsignal bezogen. In diesem Zusammenhang wird ein Verstärkungsfaktor für das Ausgangssignal des Wegsensors 56 derart eingestellt, dass sich stets das in Fig. 10 als durchgezogene Linie darstellte normalisierte Signal (Referenzsignal) ergibt. Die Einstellung des Verstärkungsfaktors sowie die Signalverstärkung kann in einer ECU durchgeführt werden, um ein Temperatureinfluss-kompensiertes Signal zu erhalten. Die Kalibrierung kann bei jeder Betätigung des Bremspedals erneut durchgeführt werden.

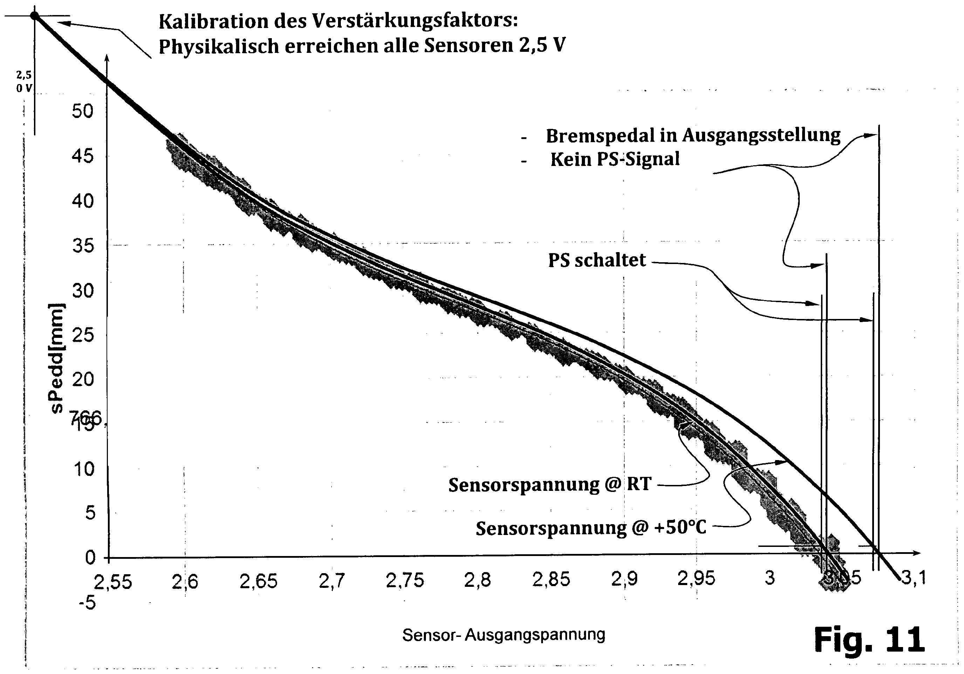

Fig. 11 zeigt in einem weiteren Diagramm den Verlauf der Sensor-Ausgangsspannung des Wegsensors 56 in Abhängigkeit vom Pedalweg bei Raumtemperatur sowie bei einer Temperatur von 50° C. Deutlich zu erkennen ist erneut die starke Temperatur-Abhängigkeit des Sensor-Ausgangssignals. Ebenfalls eingezeichnet in Fig. 11 ist der Schaltpunkt des Positionssensors 90. Dieser Schaltpunkt, der in Bezug auf die Ausgangsstellung des Stößels 34 bzw. des Betätigungskolbens 30 definiert ist, weist praktisch keine Temperaturabhängigkeit auf und eignet sich daher als Referenzpunkt für die Kalibrierung des Wegsensors 56. Wie in Fig. 11 ebenfalls zu erkennen, nähert sich das Ausgangssignal des als Hall-Sensor ausgebildeten Wegsensors 56 mit zunehmendem Pedalweg dem asymptotischen Wert 2,5 V. Diese Tatsache ermöglicht die Kalibration des Wegsensors 56 auf der Grundlage der oben erläuterten Wahl des Verstärkungsfaktors.

Gemäß einer Weiterbildung der Ausführungsbeispiele kann das Ausgangssignal des Positionssensors 90 auf der Grundlage eines anderen, auf einen Bremsvorgang hinweisenden Signals plausibilisiert werden. Wir beispielsweise auf der Grundlage eines Ausgangssignals eines Radrehzahlsensors oder eines Längsbeschleunigungssensors eine Bremsvorgang erkannt, ohne dass der Positionssensor 90 seinen Schaltzustand ändert, so kann auf einen Fehlerfall geschlossen werden.

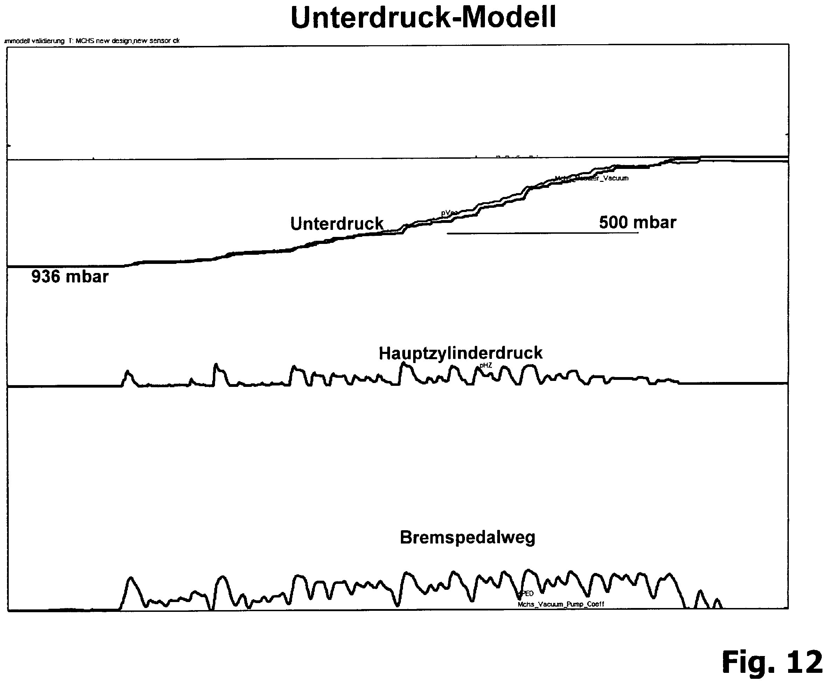

Fig. 12 erläutert den Zusammenhang zwischen dem Bremspedalweg, wie er beispielsweise auf der Grundlage des Ausgangssignals des Wegsensors 56 bestimmt werden kann, und des Unterdrucks in der Unterdruckkammer 20 des Bremskraftverstärkers 14 (vgl. Fig. 1). Es hat sich herausgestellt, dass mittels eines mathematischen Modells der in Fig. 12 dargestellte Unterdruck mit dem ebenfalls in Fig. 12 dargestellten Bremspedalweg in eine Beziehung gebracht werden kann. Mittels dieses Modells lässt sich somit auf der Grundlage des Ausgangssignals des Wegsensors 56 der im Bremskraftverstärker 14 herrschende Unterdruck ermitteln. Auf den beispielsweise in Fig. 2 dargestellten Unterdrucksensor kann daher bei gewissen Ausführungsbeispielen verzichtet werden. Ebenfalls verzichten lässt sich in gewissen Ausführungsbeispielen auf einen separaten Pedalwegsensor, der in anderen Ausführungsbeispielen zusätzlich zum Wegsensor 56 vorgesehen sein kann.

Wie sich aus den Ausführungsbeispielen ergibt, ermöglicht das hier vorgestellte Sensorbaugruppenkonzept eine vereinfachte Montage der Sensoren am Hauptzylinder. Verschiedenste Sensoren (optionaler Unterdrucksensor zur Systemausfallerkennung, Wegsensor z.B. zur Pedalwegermittlung, Positionssensor z.B. für Bremslichtschalter, usw.) können in ein einziges Gehäuse integriert werden, welches auf einfache Weise außen am Hauptzylinder angebracht werden kann. Die Sensorsignale können über einen gemeinsamen elektrischen Anschluss ausgelesen und untereinander plausibilisiert bzw. kalibriert werden.

## Patentansprüche

1. Sensorbaugruppe (16) zur Verwendung mit einem Hauptzylinder (12), der ein eingangsseitiges Betätigungselement (30) aufweist, wobei mit dem Betätigungselement (30) ein sensorisch erfassbares Signalgeberelement (40) gekoppelt ist und wobei die Sensorbaugruppe (16) das Folgende umfasst:
einen Wegsensor (56) zur Erfassung eines vom Betätigungselement (30) zurückgelegten Weges;
einen Positionssensor (90) zur Erfassung des Erreichens einer vorgegebenen Position des Betätigungselements (30); **gekennzeichnet durch**
eine Schaltungseinrichtung (58), die zur Kalibrierung des Wegsensors (56) auf der Grundlage eines Ausgangssignals des Positionssensors (90) ausgebildet ist, wobei das Kalibrieren bei Erfassen des Erreichens der vorgegebenen Position erfolgt, indem das Ausgangssignal des Wegsensors (56) auf ein Referenzsignal bezogen wird.

2. Sensorbaugruppe nach Anspruch 1, wobei der Wegsensor (56) ein analoges Signal bereitstellt und oder,
wobei der Positionssensor (90) ein binäres Signal bereitstellt.

3. Sensorbaugruppe nach einem der vorhergehenden Ansprüche, wobei der Wegsensor (56) und der Positionssensor (90) einen Abstand voneinander aufweisen und der Abstand in Abhängigkeit einer Längenausdehnung des Signalgeberelements (40) gewählt ist,
wobei der Abstand zwischen dem Wegsensor (56) und dem Positionssensor (90) vorzugsweise ungefähr der halben Länge des Signalgeberelements (40) entspricht.

4. Sensorbaugruppe nach einem der vorhergehenden Ansprüche, wobei der Wegsensor (56) und der Positionssensor (90) dazu ausgebildet sind, eine magnetische Flussdichte zu erfassen,
wobei der Wegsensor (56) vorzugsweise derart platziert ist, dass der Wegsensor (56) in einer Ausgangsstellung des Betätigungselements (30) ungefähr in einem Bereich eines ersten Flussdichtemaximums liegt.

5. Sensorbaugruppe nach einem der vorhergehenden Ansprüchen, wobei die Sensorbaugruppe einen weiteren Wegsensor (56') umfasst,
wobei der weitere Wegsensor (56') vorzugsweise derart platziert ist, dass der weitere Wegsensor (56') in einer Ausgangsstellung des Betätigungselements (30) ungefähr in einem Bereich eines zweiten Flussdichtemaximums liegt.

6. Sensorbaugruppe nach einem der vorhergehenden Ansprüche, wobei der Positionssensor (90) derart platziert ist, dass der Positionssensor (90) in einer Ausgangsstellung des Betätigungselements (30) ungefähr in einem Bereich zwischen zwei Flussdichtemaxima liegt.

7. Sensorbaugruppe nach einem der vorhergehenden Ansprüche, wobei der Positionssensor (90) Teil eines Bremslichtschalters ist.

8. Sensorbaugruppe nach einem der vorhergehenden Ansprüche, wobei der Wegsensor (56) und der Positionssensor (90) aus einer Sensorgruppe ausgewählt sind, die folgende Sensoren umfasst: Hall-Sensor, AMR-Sensor, GMR-Sensor, CMR-Sensor, Reed-Relais.

9. Sensorbaugruppe nach einem der vorhergehenden Ansprüche, ferner umfassend
einen Unterdrucksensor (54) zur Erfassung eines Unterdrucks in einem zur Kommunikation mit einem Unterdruck-Bremskraftverstärker (14) vorgesehen Unterdruckbereich (36, 38) des Hauptzylinders (12); und
ein Gehäuse (42), welches den Unterdrucksensor (54), den Wegsensor (56) sowie den Positionssensor (90) aufnimmt, wobei das Gehäuse (42) eine Gehäuseöffnung (60), die eine Kommunikation des Unterdrucksensors (54) mit dem Unterdruckbereich (36, 38) des Hauptzylinders (12) gestattet, und eine Befestigungsanordnung zur Montage des Gehäuses (42) außenseitig am Hauptzylinder (12) besitzt.

10. Hauptzylinderbaugruppe (10), umfassend
einen Hauptzylinder (12), der das eingangsseitige Betätigungselement (30) aufweist, wobei ein mit dem Betätigungselement (30) des Hauptzylinders (12) gekoppeltes und sensorisch erfassbares Signalgeberelement (40) vorgesehen ist; und
eine Sensorbaugruppe (16) nach einem der vorhergehenden Ansprüche.

11. Hauptzylinderbaugruppe nach Anspruch 10, ferner umfassend einen mit dem Betätigungselement (30) des Hauptzylinders (12) gekoppelten Stößel (34), wobei der Stößel (34) das Signalgeberelement (40) trägt.

12. Verfahren zum Betreiben einer Sensorbaugruppe (16) zur Verwendung in Kombination mit einem Hauptzylinder (12), der ein eingangsseitiges Betätigungselement (30) aufweist, mit dem ein sensorisch erfassbares Signalgeberelement (40) gekoppelt ist, wobei die Sensorbaugruppe (16) einen Wegsensor (56) und einen Positionssensor (90) aufweist und das Verfahren die folgenden Schritte umfasst:
Erfassen eines vom Betätigungselement (30) zurückgelegten Weges mittels des Wegsensors (56);
Erfassen des Erreichens einer vorgegebenen Position des Betätigungselements (30) mittels des Positionssensors (90) und
Kalibrieren des Wegsensors (56) auf der Grundlage eines Ausgangssignals des Positionssensors (90), wobei das Kalibrieren bei Erfassen des Erreichens der vorgegebenen Position erfolgt, indem das Ausgangssignal des Wegsensors (56) auf ein Referenzsignal bezogen wird.

13. Verfahren nach Anspruch 12, umfassend Abgleichen des zurückgelegten Wegs und des Erreichens der vorgegebenen Position.

14. Verfahren nach Anspruch 12 oder 13, umfassend Plausibilisieren eines Ausgangssignals des Positionssensors (90),
wobei das Plausibilisieren des Ausgangssignals des Positionssensors (90) vorzugsweise das redundante Auswerten eines anderen, auf einen Bremsvorgang hinweisenden Signals umfasst.

15. Verfahren nach einem der Ansprüche 12 bis 14, umfassend Ermitteln eines Bremspedalwegs auf der Grundlage eines Ausgangssignals des Wegsensors (56).

16. Verfahren nach einem der Ansprüche 12 bis 15, umfassend Ermitteln eines Unterdrucks in einem Unterdruck-Bremskraftverstärker auf der Grundlage eines Ausgangssignals des Wegsensors (56).

## Claims

1. A sensor assembly (16) for use with a master cylinder (12), which master cylinder has an input-side actuating element (30), a signal transmitter element (40) detectable by sensors being coupled to the actuating element (30), and the sensor assembly (16) comprising the following:
a travel sensor (56) for sensing travel performed by the actuating element (30);
a position sensor (90) for sensing when a predefined position of the actuating element (30) is reached; **characterized by**
a circuit device (58) which is designed to calibrate the travel sensor (56) on the basis of an output signal of the position sensor (90),
wherein the calibration is effected on sensing when the predefined position is reached, by referring the output signal of the travel sensor (56) to a reference signal.

2. The sensor assembly according to claim 1, wherein the travel sensor (56) provides an analog signal and/or wherein
the position sensor (90) provides a binary signal.

3. The sensor assembly according to any of the preceding claims, the travel sensor (56) and the position sensor (90) being at a distance from one another and the distance being chosen in dependence on a linear extension of the signal transmitter element (40),
wherein the distance between the travel sensor (56) and the position sensor (90) preferably corresponds to approximately half the length of the signal transmitter element (40).

4. The sensor assembly according to any of the preceding claims, the travel sensor (56) and the position sensor (90) being designed to sense a magnetic flux density, wherein
the travel sensor (56) is preferably placed in such a manner that, in a starting position of the actuating element (30), the travel sensor (56) lies approximately in a region of a first flux density maximum.

5. The sensor assembly according to any of the preceding claims, the sensor assembly comprising a further travel sensor (56'), wherein
the further travel sensor (56') is preferably placed in such a manner that, in a starting position of the actuating element (30), the further travel sensor (56') lies approximately in a region of a second flux density maximum.

6. The sensor assembly according to any of the preceding claims, the position sensor (90) being placed in such a manner that, in a starting position of the actuating element (30), the position sensor (90) lies approximately in a region between two flux density maxima.

7. The sensor assembly according to any of the preceding claims, the position sensor (90) being part of a stop light switch.

8. The sensor assembly according to any of the preceding claims, the travel sensor (56) and the position sensor (90) being selected from a sensor group comprising the following sensors: Hall sensor, AMR sensor, GMR sensor, CMR sensor, Reed relay.

9. The sensor assembly according to any of the preceding claims, further comprising
a vacuum sensor (54) for sensing a vacuum in a vacuum region (36, 38), provided for communication with a vacuum brake booster (14), of the master cylinder (12); and
a housing (42) which accommodates the vacuum sensor (54), the travel sensor (56) and the position sensor (90), the housing (42) having a housing opening (60) which permits a communication of the vacuum sensor (54) with the vacuum region (36, 38) of the master cylinder (12), and a fastening arrangement for mounting the housing (42) on the outside of the master cylinder (12).

10. A master cylinder assembly (10), comprising
a master cylinder (12) which has the input-side actuating element (30), a signal transmitter element (40) coupled to the actuating element (30) of the master cylinder (12) and detectable by sensors being provided; and
a sensor assembly (16) according to any of the preceding claims.

11. The master cylinder assembly according to claim 10, further comprising a plunger (34) coupled to the actuating element (30) of the master cylinder (12), the plunger (34) carrying the signal transmitter element (40).

12. A method for operating a sensor assembly (16) for use in combination with a master cylinder (12), which master cylinder has an input-side actuating element (30), to which a signal transmitter element (40) detectable by sensors is coupled, wherein the sensor assembly (16) comprises a travel sensor (56) and a position sensor (90) and the method comprises the following steps:
sensing a travel performed by the actuating element (30) by means of the travel sensor (56);
sensing when a predefined position of the actuating element (30) is reached by means of the position sensor (90) and
calibrating the travel sensor (56) on the basis of an output signal of the position sensor (90), wherein the calibrating is effected on sensing when the predefined position is reached, by referring the output signal of the travel sensor (56) to a reference signal.

13. The method according to claim 12, comprising comparing the travel performed and when the predefined position is reached.

14. The method according to any of the preceding claims, comprising running a plausibility check on an output signal of the position sensor (90),
wherein the running of the plausibility check on the output signal of the position sensor (90) preferably comprises the redundant evaluation of another signal indicating a braking procedure.

15. The method according to any of claims 12 to 14, comprising determining a brake pedal travel on the basis of an output signal of the travel sensor (56).

16. The method according to any of claims 12 to 15, comprising determining a vacuum in a vacuum brake booster on the basis of an output signal of the travel sensor (56).

## Revendications

1. Bloc détecteur (16) destiné à être utilisé avec un maître-cylindre (12) comprenant un élément d'actionnement (30) côté entrée, dans lequel un élément transmetteur de signaux (40) pouvant être détecté par des capteurs est couplé à l'élément d'actionnement (30), et le bloc détecteur (16) comprenant :
un capteur de déplacement (56) pour détecter une distance parcourue par l'élément d'actionnement (30)
un capteur de position (90) pour détecter l'arrivée à une position prédéterminée de l'élément d'actionnement (30) ;
**caractérisé par**
un dispositif de commutation (58) conçu pour étalonner le capteur de déplacement (56) sur la base d'un signal de sortie du capteur de position (90), l'étalonnage étant effectué lors de la détection de l'arrivée à la position prédéterminée en rapportant le signal de sortie du capteur de déplacement (56) à un signal de référence.

2. Bloc détecteur selon la revendication 1, dans lequel le capteur de déplacement (56) fournit un signal analogique et/ou dans lequel le capteur de position (90) fournit un signal binaire

3. Bloc détecteur selon l'une des revendications précédentes, dans lequel le capteur de déplacement (56) et le capteur de position (90) présentent une distance l'un de l'autre et la distance est choisie en fonction d'une extension longitudinale de l'élément transmetteur de signaux (40), la distance entre le capteur de déplacement (56) et le capteur de position (90) correspondant de préférence environ à la moitié de la longueur de l'élément transmetteur de signaux (40).

4. Bloc détecteur selon l'une des revendications précédentes, dans lequel le capteur de déplacement (56) et le capteur de position (90) sont agencés pour détecter une densité de flux magnétique, le capteur de déplacement (56) étant de préférence placé de telle façon que le capteur de déplacement (56) se trouve, dans une position initiale de l'élément d'actionnement (30), approximativement dans une zone d'un premier maximum de densité de flux.

5. Bloc détecteur selon l'une des revendications précédentes, dans lequel le bloc détecteur comprend un autre capteur de déplacement (56'), l'autre capteur de déplacement (56') étant de préférence placé de telle façon que l'autre capteur de déplacement (56') se trouve, dans une position initiale de l'élément d'actionnement (30), approximativement dans une zone d'un deuxième maximum de densité de flux.

6. Bloc détecteur selon l'une des revendications précédentes, dans lequel le capteur de position (90) est placé de telle façon que le capteur de position (90) se trouve, dans une position initiale de l'élément d'actionnement (30), approximativement dans une zone comprise entre deux maxima de densité de flux.

7. Bloc détecteur selon l'une des revendications précédentes, dans lequel le capteur de position (90) fait partie d'un contacteur de feux stop.

8. Bloc détecteur selon l'une des revendications précédentes, dans lequel le capteur de déplacement (56) et le capteur de position (90) sont choisis dans un groupe de capteurs qui comprend les capteurs suivants : capteur à effet Hall, capteur AMR, capteur GMR, capteur CMR, relais Reed.

9. Bloc détecteur selon l'une des revendications précédentes, comprenant en outre
un capteur de dépression (54) pour détecter une dépression dans une zone de dépression (36, 38) du maître-cylindre (12) prévue pour la communication avec un servofrein à dépression (14) ;
un boîtier (42) qui reçoit le capteur de dépression (54), le capteur de déplacement (56) et le capteur de position (90), le boîtier (42) possédant une ouverture de boîtier (60) qui permet une communication du capteur de dépression (54) avec la zone de dépression (36, 38) du maître-cylindre (12), et un dispositif de fixation pour le montage du boîtier (42) côté extérieur sur le maître-cylindre (12).

10. Bloc maître-cylindre (10) comportant
un maître-cylindre (12) comprenant l'élément d'actionnement (30) côté entrée, un élément transmetteur de signaux (40) couplé à l'élément d'actionnement (30) du maître-cylindre (12) et pouvant être détecté par des capteurs étant prévu ; et
un bloc détecteur (16) selon l'une des revendications précédentes.

11. Bloc maître-cylindre selon la revendication 10, comprenant en outre un poussoir (34) couplé à l'élément d'actionnement (30) du maître-cylindre (12), le poussoir (34) portant l'élément transmetteur de signaux (40).

12. Procédé pour faire fonctionner un bloc détecteur (16) à utiliser en combinaison avec un maître-cylindre (12) comprenant un élément d'actionnement (30) côté entrée auquel est couplé un élément transmetteur de signaux (40) pouvant être détecté par des capteurs, dans lequel le bloc détecteur (16) comprend un capteur de déplacement (56) et un capteur de position (90), et le procédé comprenant les étapes suivantes :
détection d'une distance parcourue par l'élément d'actionnement (30) au moyen du capteur de déplacement (56) ;
détection de l'arrivée à une position prédéterminée de l'élément d'actionnement (30) au moyen du capteur de position (90) et
étalonnage du capteur de déplacement (56) sur la base d'un signal de sortie du capteur de position (90), l'étalonnage étant effectué lors de la détection de l'arrivée à la position prédéterminée en rapportant le signal de sortie du capteur de déplacement (56) à un signal de référence.

13. Procédé selon la revendication 12, comprenant l'ajustement de la distance parcourue et l'arrivée à la position prédéterminée.

14. Procédé selon la revendication 12 ou 13, comprenant la plausibilisation d'un signal de sortie du capteur de position (90), la plausibilisation du signal de sortie du capteur de position (90) comprenant de préférence l'évaluation redondante d'un autre signal indiquant un freinage.

15. Procédé selon l'une des revendications 12 à 14, comprenant la détermination d'une course de pédale de frein sur la base d'un signal de sortie du capteur de déplacement (56).

16. Procédé selon l'une des revendications 12 à 15, comprenant la détermination d'une dépression dans un servofrein à dépression sur la base d'un signal de sortie du capteur de déplacement (56).
